# EUROPÄISCHE PATENTSCHRIFT

(11) **EP 0 835 992 B1**
(45) Veröffentlichungstag und Bekanntmachung des Hinweises auf die Patenterteilung: **11.12.2002**
(21) Anmeldenummer: 97116123.7
(22) Anmeldetag: 17.09.1997
(51) Int. Cl.: F01P 5/12, F02B 63/06

(54) **Antriebseinheit, insbesondere für ein Kraftfahrzeug**
Propulsion unit, especially for a motor vehicle
Groupe motopropulseur, notamment pour un véhicule automobile

(30) Priorität: 08.10.1996 DE 19641451
(43) Veröffentlichungstag der Anmeldung: 15.04.1998
(73) Patentinhaber: Voith Turbo GmbH & Co. KG, 89522 Heidenheim (DE); MAN Nutzfahrzeuge Aktiengesellschaft, 80995 München (DE)
(72) Erfinder: Edelmann, Peter, 89522 Heidenheim (DE); Vogelsang, Klaus, 74564 Crailsheim (DE); Möller, Heribert, 91623 Sachsen (DE); Rose, Peter, 89522 Heidenheim (DE); Heilinger, Peter, 74564 Crailsheim (DE); Gebhardt, Hans, 90579 Langenzenn (DE)
(74) Vertreter: Dr. Weitzel & Partner

(56) Entgegenhaltungen:
- GB-A- 650 891
- US-A- 4 257 370
- US-A- 4 787 868

## Beschreibung

Die Erfindung betrifft eine Antriebseinheit, insbesondere für ein Kraftfahrzeug, mit einem Verbrennungsmotor und einem Getriebe, ferner mit einem Flüssigkeits-Kühlkreislauf sowie mit einem Drehschwingungsdämpfer. Antriebseinheiten dieser Art sind aus zahlreichen Druckschriften bekannt geworden. Es wird beispielsweise verwiesen auf
(1) DE 37 13 580 C1
(2) US 3 720 372
(3) DE 33 01 560
(4) US 3 650 358
(5) DE 44 40 163

Bei diesen Antriebseinheiten fällt an verschiedenen Stellen während des Betriebes Wärme an, die abgeführt werden muß. Eine solche Wärmequelle stellt der Retarder dar, der bei Bremsung aus hoher Fahrgeschwindigkeit kinetische Bremsenergie aufnimmt und in Wärme umsetzt. Gemäß Dokument (1) kann die im Retarder an die Bremsflüssigkeit übergegangene Wärme mittels eines speziellen Wärmetauschers dem Kühlmittel oder der Umgebungsluft zugeführt werden.

Eine weitere Wärmequelle stellt der Antriebsmotor dar, dessen Wärmeabfuhr von entscheidender Bedeutung ist. Bei der Antriebseinheit gemäß Dokument (4) wird das Kühlmittel, das den Motor kühlt, zugleich als Betriebsflüssigkeit für den Retarder verwendet.

Die üblichen Vskositäts-Drehschwingungsdämpfer umfassen u.a. einen massebehafteten Ring, der einen möglichst großen Durchmesser hat und der sich innerhalb eines Gehäuses befindet, das mit einer hochviskosen Masse, z.B. Silikonöl, ausgefüllt ist. Solche Drehschwingungsdämpfer werden üblicherweise mit Luft gekühlt.

Bei der Konstruktion von Antriebseinheiten ist man ganz allgemein um eine möglichst kompakte Bauweise bemüht. Die Tendenz geht dahin, Bauteile einzusparen und die ganze Einheit kleiner und kostengünstiger zu gestalten.

Eine Ausführung einer Antriebseinheit ist aus der Druckschrift GB 650,891 vorbekannt, umfassend einen Verbrennungsmotor mit einem Drehschwingungsdämpfer, welcher zum Zwecke der Kühlung in den Schmierölflüssigkeitskreislauf des Verbrennungsmotors eingeschaltet ist Dabei wird der zur Lagerschmierung dienende Flüssigkeitskreislauf durch den Dämpfer hindurch geleitet Es ist dabei zur Aufrechterhaltung des Kreislaufes erforderlich entsprechende Mittel, beispielsweise Pumpeinrichtungen vorzusehen. Diese müssen bei der Konzeption der Antriebseinheit bzw. des Flüssigkeitskreislaufes mit berücksichtigt werden, insbesondere hinsichtlich des erforderlichen Bauraumes und der Ansteuerung. Hierbei wurden Fortschritte erzielt, die aber noch nicht ausreichen.

Der Erfindung liegt die Aufgabe zugrunde, eine Antriebseinheit mit einem Motor, einem Getriebe, einem Flüssigkeits-Kühlkreislauf und einem Drehschwingungsdämpfer sowie gegebenenfalls weiteren Elementen derart zu gestalten, daß ein geringerer Bauraum, insbesondere eine geringere axiale Baulänge sowie ein geringeres Gewicht erzielbar sind als bei bekannten Antriebseinheiten.

Diese Aufgabe wird durch die Merkmale von Anspruch 1 gelöst.

Der wesentliche Gedanke der Erfinder besteht somit darin, den Drehschwingungsdämpfer einer solchen Antriebseinheit im Flüssigkeits-Kühlkreislauf anzuordnen. Dies bedeutet, daß die Kühlflüssigkeit des ohnehin vorhandenen Flüssigkeits-Kühlkreislaufes dazu ausgenutzt wird, auch den Drehschwingungsdämpfer zu kühlen.

Der Gedanke läßt sich auf unterschiedliche Weise verwirklichen. So kann der Drehschwingungsdämpfer beispielsweise im Kurbelgehäuse angeordnet werden. Wird er außerhalb des Kurbelgehäuses angeordnet, so kann das Leitungssystem derart gestaltet und angeordnet werden, daß die Kühlflüssigkeit in die unmittelbare Nähe des Gehäuses des Drehschwingungsdämpfers geführt wird, so daß es zu einem Wärmeaustausch kommen kann.

Gemäß einem weiterführenden Gedanken kann der Drehschwingungsdämpfer außer seiner angestammten Funktion noch mit weiteren Funktionen ausgestattet werden. So kann er beispielsweise auf einer seiner Stirnflächen als Pumpenrad für die Kühlflüssigkeit gestaltet werden bzw. ein Pumpenrad tragen. Alternativ oder zusätzlich kann eine seiner Stirnflächen als Rotorschaufelrad eines Retarders ausgebildet werden.

Die Erfindung ist anhand der Zeichnung näher erläutert. Darin ist im einzelnen folgendes dargestellt:
Figur 1 zeigt eine Antriebseinheit in einer schematischen Darstellung.
Figur 2 zeigt die Antriebseinheit gemäß Figur 1 mit Blickrichtung auf die Motorachse und zugleich auf jene Seite, auf der sich der Lüfter befindet.
Figur 3 zeigt wesentliche Teile der Antriebseinheit gemäß Figur 2 in einem Axialschnitt.

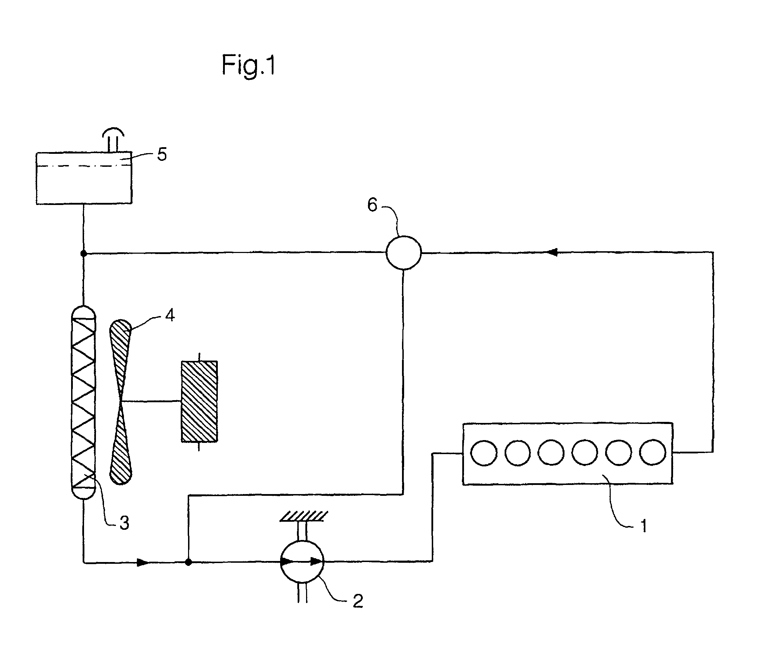

Die in Figur 1 dargestellte Antriebseinheit weist einen Verbrennungsmotor 1 auf. In dem hier dargestellten Flüssigkeits-Kühlkreislauf befinden sich eine Kühlflüssigkeitspumpe 2, ein Kühler 3, ein Lüfter 4, ein Ausgleichsbehälter 5 sowie ein Thermostat 6.

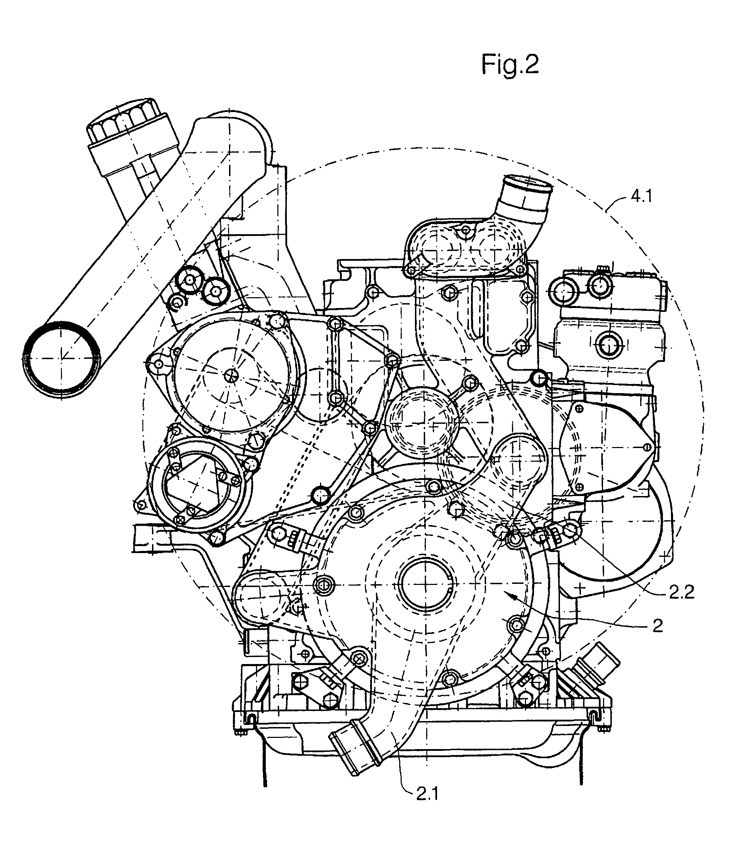

In Figur 2 sind die folgenden Bauteile erkennbar:
Die Kühlflüssigkeitspumpe 2, eine Saugleitung 2.1 und eine weitere Saugleitung 2.2. Ferner erkennt man den Flugkreis 4.1 des Lüfters.

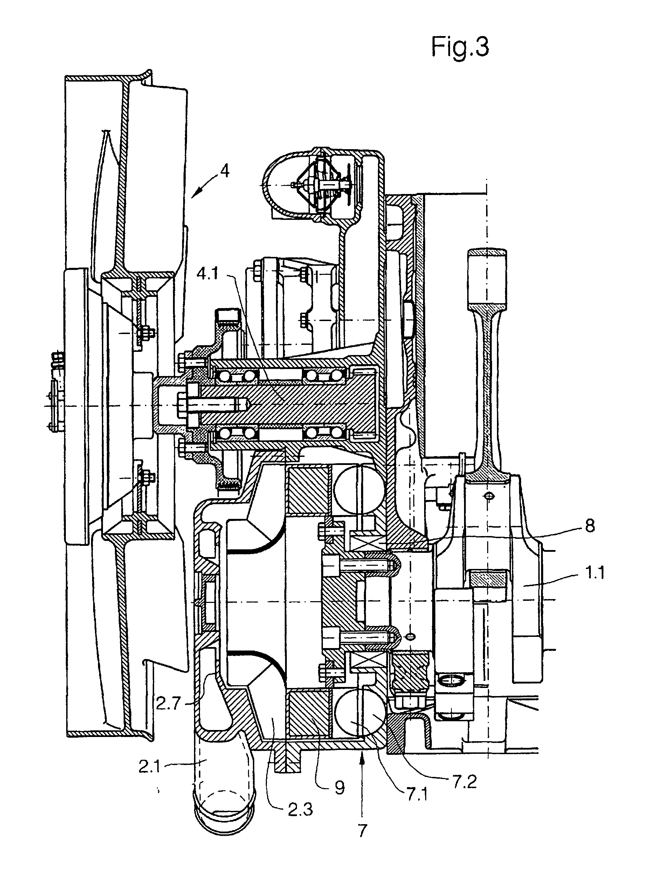

Figur 3 läßt im einzelnen folgendes erkennen:
Die Kurbelwelle 1.1 des Motors 1, einen Retarder 7 mit Rotorschaufelrad 7.1 und Statorschaufelrad 7.2, ein Dichtelement Wasser/Öl 8, ein Pumpenrad 2.3 der Kühlflüssigkeitspumpe, den Lüfter 4 mit der Lüfterwelle 4.1. In einem Deckelkörper ist die Saugleitung 2.1 untergebracht - siehe Figur 2. Man erkennt weiterhin einen Drehschwingungsdämpfer 9.

## Patentansprüche

1. Antriebseinheit, insbesondere für ein Kraftfahrzeug,
mit einem Verbrennungsmotor (1) und einem Getriebe;
mit einem Flüssigkeits-Kühlkreislauf;
mit einem Drehschwingungsdämpfer (9);
der Drehschwingungsdämpfer (9) ist in den Flüssigkeits-Kühlkreislauf geschaltet;
**gekennzeichnet durch** das folgende Merkmal:
der Drehschwingungsdämpfer (9) ist auf einer seiner Stirnflächen als Rotorschaufelrad (7.1) eines Retarders (7) ausgebildet.

2. Antriebseinheit nach Anspruch 1, **dadurch gekennzeichnet, daß** der Drehschwingungsdämpfer (9) innerhalb des Kurbelgehäuses angeordnet ist.

3. Antriebseinheit nach Anspruch 1, **dadurch gekennzeichnet, daß** der Drehschwingungsdämpfer (9) innerhalb eines Zwischengehäuses angeordnet ist, das seinerseits an eine Stirnseite des Kurbelgehäuses angebaut ist.

4. Antriebseinheit nach einem der Ansprüche 1 bis 3, **dadurch gekennzeichnet, daß** der Drehschwingungsdämpfer (9) auf der anderen Stirnseite als Pumpenrad (2.3) für die Kühlflüssigkeit ausgebildet ist.

## Claims

1. A drive unit, especially for a motor vehicle, with an internal combustion engine (1) and a gear, a liquid cooling circuit, a torsional vibration damper (9), with said torsional vibration damper (9) being connected in the liquid cooling circuit, **characterized by** the following feature:
the torsional vibration damper (9) is arranged on one of its face sides as a rotor blade wheel (7.1) of a retarder.

2. A drive unit as claimed in claim 1, **characterized in that** the torsional vibration damper (9) is arranged within the crankcase.

3. A drive unit as claimed in claim 1, **characterized in that** the torsional vibration damper (9) is arranged within an intermediate housing which on its part is attached to a face side of the crankcase.

4. A drive unit as claimed in one of the claims 1 to 3, **characterized in that** the torsional vibration damper (9) is arranged on the other face side as an impeller (2.3) for the coolant.

## Revendications

1. Organe de commande, notamment pour véhicule automobile,
avec un moteur à combustion inteme (1) et un train d'engrenages ;
avec un circuit de liquide de refroidissement ;
avec un amortisseur de vibrations de torsion (9) ;
ledit amortisseur de vibrations de torsion (9) étant connecté dans le circuit de liquide de refroidissement ;
**caractérisé par** la disposition suivante :
sur une de ses faces frontales, ledit amortisseur de vibrations de torsion (9) est conformé en forme de roue à aubes de rotor (7.1) d'un ralentisseur (7).

2. Organe de commande selon la revendication 1, **caractérisé en ce que** l'amortisseur de vibrations de torsion (9) est disposé au sein du carter.

3. Organe de commande selon la revendication 1, **caractérisé en ce que** l'amortisseur de vibrations de torsion (9) est disposé au sein d'un boîtier intermédiaire, lui-même monté sur une face frontale du carter.

4. Organe de commande selon l'une des revendications 1 à 3, **caractérisé en ce que** l'amortisseur de vibrations de torsion (9) est conformé en forme de pompe (2.3) pour le liquide de refroidissement.
